# EUROPÄISCHE PATENTSCHRIFT

(11) **EP 1 821 382 B1**
(45) Veröffentlichungstag und Bekanntmachung des Hinweises auf die Patenterteilung: **27.07.2011**
(21) Anmeldenummer: 07002470.8
(22) Anmeldetag: 05.02.2007
(51) Int. Cl.: H02J 3/38

(54) **Windenergieanlage mit Zusatzschaltung für Schwachwindbetrieb**
Wind farm with an additional gearswitch assembly for low-wind operation
Eolienne dotée d'un couplage supplémentaire pour fonctionnement à bas régime

(30) Priorität: 21.02.2006 DE 102006008014
(43) Veröffentlichungstag der Anmeldung: 22.08.2007
(73) Patentinhaber: REpower Systems AG, 22335 Hamburg (DE)
(72) Erfinder: Altemark, Jens, 24768 Rendsburg (DE)
(74) Vertreter: Glawe, Delfs, Moll

(56) Entgegenhaltungen:
- WO-A-02/087062
- GB-A- 2 410 386

## Beschreibung

Die Erfindung betrifft eine Windenergieanlage umfassend einen Windrotor zum Antrieb eines Asynchrongenerators zur Abgabe elektrischer Leistung an einen Transformator.

Windenergieanlagen werden in immer größer werdenden Leistungsklassen produziert. Bei günstigen Windbedingungen können diese Windenergieanlagen eine hohe Leistung zur Einspeisung in ein Netz abgeben. Bei im Meer aufgestellten Windenergieanlagen ist der Betrieb mit oder nahe bei Volllast sehr häufig. Bei an der Küste oder gar weiter im Binnenland aufgestellten Windenergieanlagen sind die Windbedingungen hingegen häufig nicht so günstig. Die Windenergieanlagen sollen daher so ausgelegt sein, dass sie auch bei weniger günstigen Windbedingungen noch ausreichend elektrische Leistung zur Verfügung stellen. Die Erhöhung der Leistungsausbeute unter Schwachwindbedingungen ist daher wichtig, um die Wirtschaftlichkeit einer Windenergieanlage gerade an solchen ohnehin schon schwierigen Standorten zu erhöhen. Je größer die Nennleistung einer Windenergieanlage ist, umso häufiger ist zu erwarten, dass sie bezogen auf ihre Nennleistung im Schwachwindbetrieb läuft. Für Windkraftanlagen kleiner Leistung mit einem Permanentmagnetgenerator ist es bekannt, dass die Höhe der Spannung der abgegebenen Leistung in Abhängigkeit von der Drehgeschwindigkeit des Windrotors (die wiederum durch die Windgeschwindigkeit bestimmt ist) schwankt. Um dennoch einen solchen Permanentgenerator an ein Netz mit im Wesentlichen konstanter Sollspannung anschließen zu können, kann der Permanentgenerator über einen Stufentransformator mit dem Netz verbunden werden. Durch entsprechende Schaltung der Stufen des Transformators kann die schwankende Spannung des Permanentgenerators passend zur Spannung im Netz übersetzt werden.

Alternativ werden für Windenergieanlagen häufig Asynchrongeneratoren verwendet. Charakteristisch für diese Generatoren ist, dass der Stator direkt mit dem Netz verbunden ist und damit stets auf dem Niveau der Netzspannung gehalten ist. Mit einem Stufentransformator kann hier keine Anpassung erreicht werden. Das Dokument GB-A-2 410 386, das zum vorreichnenden Teil des Anspruchs 1 entspricht, zeigt eine solche Windenergieanlage. Es stellt sich die Aufgabe, Windenergieanlagen mit Asynchrongeneratoren hinsichtlich ihres Betriebsverhaltens bei Schwachwind zu verbessern.

Bei schwachem Wind läuft der Windrotor der Windenergieanlage mit niedriger Drehzahl. Der von dem Windrotor direkt oder über ein Getriebe angetriebene Generator läuft daher auch mit vergleichsweise niedriger Drehzahl. Sie liegt recht weit unter der durch die Netzfrequenz und die Polradzahl eindeutig bestimmten Synchrondrehzahl. Das bedeutet, dass ein verhältnismäßig hoher Schlupf im Asynchrongenerator auftritt. Das aus dem Generator und dem Umrichter gebildete elektrische System der Windenergieanlage ist aber nur bis zu einem bestimmten Schlupf ausgelegt. In der Regel ist dies ein Grenzschlupf von etwa 25%. Will man diesen Bereich nach unten zu niedrigeren Drehzahlen hin erweitern, so ist dafür an sich ein größer dimensionierter Umrichter erforderlich. Dies ist aber aufwendig und damit teuer.

Es sind daher alternative Möglichkeiten ersonnen worden, um mit einem herkömmlichen Generator-/Umrichtersystem einen Schwachwindbetrieb mit höherem Schlupf zu ermöglichen.

Die erste Möglichkeit besteht darin, für den Schwachwindbetrieb die Wicklung des Stators des Generators kurzzuschließen. Der Generator gibt dann die erzeugte elektrische Leistung allein über den Rotorkreis aus. Das bedeutet, dass die gesamte Leistung durch den Umrichter fließen muss. Die Asynchronmaschine wird also in diesem Fall mit einer Art Vollumrichter-Konzept betrieben. Die sich aus der Verwendung einer doppelt gespeisten Asynchronmaschine ergebenden Vorteile werden damit zumindest für diese Betriebsart aufgegeben. Die zweite Möglichkeit besteht darin, eine Stern-Dreiecks-Umschaltung für den Stator vorzusehen. Bei dieser Umschaltung handelt es sich um eine im Prinzip seit Jahrzehnten bewährte Schaltung, um Drehstrommaschinen in zwei verschiedenen Arbeitspunkten zu betreiben. Solche Stern-Dreiecks-Umschaltung bedingt einen verhältnismäßig aufwendigen Umschalter. Er muss einerseits dafür dimensioniert sein, die gesamte im Statorkreis auch unter Volllast erzeugte Leistung aufzunehmen, und zum anderen muss er jede einzelne Wicklung des Stators in zwei völlig verschiedene Weisen schalten können, nämlich einmal auf einen gemeinsamen Sternpunkt und einmal im Dreieck mit den jeweils beiden anderen Wicklungen verbunden. Es hat sich gezeigt, dass beide der vorstehend genannten Möglichkeiten immer noch verhältnismäßig aufwendig sind, und zudem die Zuverlässigkeit beeinträchtigen.

Der Erfindung liegt die Aufgabe zu Grunde, ausgehend von der zuletzt genannten Möglichkeit eine Schaltung und ein Verfahren anzugeben, womit eine Verbesserung des Betriebsverhaltens bei Schwachwind bei geringerem Aufwand und höherer Zuverlässigkeit erreicht werden kann.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage umfassend einen Windrotor zum Antrieb eines Asynchrongenerators zur Abgabe elektrischer Leistung an einen Transformator, der eine erste Primärwicklung aufweist und an die über eine Verbindung der Generator angeschlossen ist, ist gemäß der Erfindung vorgesehen, dass der Transformator eine zweite Primärwicklung aufweist und eine Zusatzschaltung mit einem Umschalter in der Verbindung vorgesehen ist, der dazu ausgebildet ist, in Abhängigkeit von einem Schaltsignal den Generator mit der ersten oder zweiten Primärwicklung zu verbinden.

Nachfolgend seien einige Begriffe erläutert:

Unter einem Asynchrongenerator wird eine Asynchronmaschine verstanden, die als Generator betrieben ist. Die Asynchronmaschine kann mit einem kurzgeschlossenen Rotor (Käfigläufer-Asynchronmaschine) oder mit einem gewickelten Rotor (doppelt gespeiste Asynchronmaschine) ausgebildet sein. Im Fall der doppelt gespeisten Asynchronmaschine soll unter Stator diejenige Wicklung verstanden werden, die direkt mit dem Transformator bzw. dem Netz verbunden ist, und unter Rotor die andere Wicklung, an die der Umrichter angeschlossen ist; diese Benennung gilt unabhängig davon, welche der beiden Wicklungen sich tatsächlich mit der Antriebswelle dreht.

Die Begriffe "erste" und "zweite" dienen der Unterscheidung der Primärwicklungen. Sie sind nicht abschließend zu verstehen. Insbesondere können noch weitere (dritte, vierte etc.) Primärwicklungen vorgesehen sein.

Die Erfindung beruht auf dem Gedanken, mittels der Zusatzschaltung und ihrem Umschalter die elektrische Leistung abgebende Wicklung des Generators (bei einer doppelt gespeisten Asynchronmaschine ist dies in der Regel die stillstehende Wicklung des Stators) je nach Betriebszustand auf einem höheren oder niedrigeren Spannungsniveau zu betreiben. Bei Starkwindbetrieb ist der Stator mit der ersten Primärwicklung verbunden, bei Schwachwindbetrieb mit der zweiten. Dabei verhält sich das Wicklungsverhältnis des Trafos in der Regel so, dass die zweite Primärwicklung ein geringeres Spannungsniveau als die erste Primärwicklung aufweist. Damit erreicht die Erfindung, dass der Stator im Schwachwindbetrieb auf einem niedrigeren Spannungsniveau gehalten ist. Das bedingt, dass auch die Rotorspannung zwangsläufig sinkt. Die niedrigere Spannung am Rotor wiederum ermöglicht einen Betrieb mit höherem Schlupf. So kann bspw. bei ansonsten unverändertem Generator und Umrichter ein Schlupf von gut 35% erreicht werden, verglichen mit einem herkömmlichen Maximalwert von 25%. Wegen des überproportionalen Zusammenhangs mit der erzeugten Leistung bedeutet diese Vergrößerung des Schlupfs um 10% eine enorme Ausdehnung des nutzbaren Leistungsspektrums bei schwachem Wind. Das Vorsehen von stärker dimensionierten Umrichtern ist hierzu nicht nötig.

Der für die Erfindung erforderliche Zusatzaufwand ist minimal. Dies umso mehr deshalb, da häufig ohnehin bereits Transformatoren mit zwei Primärwicklungen vorhanden sind, um Rotor- und Statorkreis auf getrennten (aber herkömmlicherweise jeweils unveränderten) Spannungsniveaus zu betreiben. Dank der Erfindung ist es so ermöglicht, mit einer 3-Megawatt-Windenergieanlage das Schwachwindverhalten einer 2-Megawatt-Anlage zu erreichen, und dabei mit dem schwächer dimensionierten (und damit weniger aufwendigeren) Umrichter der 2-Megawatt-Anlage auszukommen. Der Umrichter, der üblicherweise eines der teueren Komponenten der Windenergieanlage ist, kann damit kleiner ausfallen. Ein weiterer Vorteil der Erfindung ist, dass der erfindungsgemäße Umschalter für die zweite Primärwicklung nur eine geringe Leistung zu übertragen braucht. Er kann damit klein dimensioniert sein und ist dank geringer Belastung auch zuverlässig im Betrieb. Zusammenfassend kann gesagt werden, dass die Erfindung damit auf verblüffend einfache Weise eine Ausdehnung des Betriebsbereichs bei Schwachwindbedingungen und damit eine Steigerung des Ertrags mit einer Erhöhung der Zuverlässigkeit bei geringem Aufwand verknüpft.

Es ist nicht unbedingt erforderlich, dass die beiden Primärwicklungen als vollständige eigene Wicklungen ausgeführt sind. Es kann genügen, wenn eine der Primärwicklungen mittels einer Anzapfung der anderen Primärwicklungen ausgebildet ist. Häufig ist die zweite Primärwicklung eine Anzapfung der ersten. Der für die zweite Primärwicklung erforderliche Aufwand verringert sich damit weiter.

Wesentlich ist, dass der Generator als eine doppelt gespeiste Asynchronmaschine ausgeführt ist. Bei dieser Bauart ist ein unabhängiger Stator- und Rotorkreis vorhanden. Üblicherweise ist bei Verwendung eines solchen Generators der Stator direkt mit dem Transformator verbunden, während der Rotor über einen Umrichter geführt ist. Es ist aber auch die umgekehrte Schaltungsanordnung möglich. Aus Gründen der Übersichtlichkeit wird in dieser Anmeldung davon ausgegangen, dass die drehende Wicklung, der Rotor, mit dem Umrichter verbunden ist. Die Erfindung ist aber nicht darauf beschränkt, sondern erstreckt sich genauso auf die umgekehrte Anordnung.

Zweckmäßigerweise weist die Zusatzschaltung weiter eine Zusatzsteuereinrichtung zur selbsttätigen Erzeugung des Schaltsignals auf. Dies ist zwar nicht unbedingt erforderlich, da das Schaltsignal auch von der in der Regel ohnehin vorhandenen Betriebssteuerung der Windenergieanlage ausgegeben werden kann. Aus Gründen der autarken Ausführung und zur Vereinfachung einer Nachrüstung ist aber eine eigene, gesonderte Zusatzsteuereinrichtung für die Zusatzschaltung von Vorteil. Vorzugsweise umfasst die Zusatzsteuereinrichtung ein Leistungsmonitormodul, das mit einem Klassifikationsmodul verbunden ist. Dabei ist das Klassifikationsmodul dazu ausgebildet, von dem Leistungsmonitormodul abgegebene Signale in ein Schwach- und ein Starkwindbetrieb zu klassifizieren. Je nach dem Ergebnis der Klassifikation gibt die Zusatzsteuereinrichtung das Schaltsignal an den Umschalter aus, um den Stator mit der ersten (für Starkwindbetrieb) oder zweiten (für Schwachwindbetrieb) Primärwicklung zu verbinden.

Die Erfindung bezieht sich ferner auf ein Verfahren gemäß dem unabhängigen Anspruch 7.

Danach ist bei einem Verfahren zum Betreiben einer Windenergieanlage mit einem Windrotor, einen damit angetriebenen Asynchrongenerator zur Abgabe elektrischer Leistung an einen Transformator, wobei der Generator über einen Umschalter mit dem Transformator verbunden ist und je nach Stellung des Umschalters in einer ersten oder zweiten Betriebsart betrieben wird, gemäß der Erfindung vorgesehen, dass die Windenergieanlage in einer der Betriebsarten betrieben wird, wobei der Generator mit einer Primärwicklung des Transformators verbunden ist, die von der Windenergieanlage abgegebene Leistung überwacht wird und bestimmt wird, ob sie in einem Schaltbereich liegt, und dass der Umschalter betätigt wird, wodurch der Generator mit einer anderen Primärwicklung verbunden ist, und Betreiben der Windenergieanlage in der anderen Betriebsart.

Das erfindungsgemäße Verfahren überwacht im Betrieb die Leistung, und entscheidet danach, ob eine Starkwind- oder eine Schwachwindsituation vorliegt. Je nach dem wird der Umschalter betätigt, so dass der Generator mit einer zu der jeweiligen Windsituation passenden Primärwicklung verbunden ist. Wie vorstehend bereits ausführlich erläutert wurde, ist für einen Starkwindbetrieb die herkömmliche erste Primärwicklung vorgesehen, während für den Schwachwindbetrieb gemäß der Erfindung auf eine zweite Primärwicklung umgeschaltet wird. Die zweite Primärwicklung ist vorzugsweise für ein niedrigeres Spannungsniveau verglichen mit der ersten Primärwicklung ausgelegt, weshalb es zweckmäßig ist, sie als eine Anzapfung der ersten Primärwicklung auszuführen.

Es sei noch angemerkt, dass für die Überwachung der Leistung sowohl ein elektrischer wie auch ein mechanischer Parameter verwendet werden kann. Während die Überwachung der elektrischen Leistung bspw. durch Bestimmen der abgegebenen Wirkleistung erfolgen kann, so kann die mechanische Leistung in besonders einfacher Weise über die Windgeschwindigkeit abgeschätzt werden. Windgeschwindigkeitsmesser sind in der Regel für jede Windenergieanlage verfügbar, und auch wenn ihre Genauigkeit nicht besonders hoch ist, so genügt dies doch für eine Klassifizierung, ob eine Stark- oder eine Schwachwindsituation vorliegt.

Vorzugsweise erfolgt das Bestimmen, ob ein Schwachwindbetrieb (oder ein Starkwindbetrieb) vorliegt, unter Berücksichtigung einer Mindestzeitdauer. Diese kann bspw. anhand einer bestimmten Anzahl von Sekunden oder Minuten vorgegeben sein. Dadurch wird erreicht, dass ein konstantes und auf Beständigkeit abzielendes Schaltverhalten erreicht wird. Hektisches und verschleißförderndes hin und her Schalten zwischen den Betriebszuständen kann damit vermieden werden. Alternativ oder zusätzlich kann vorgesehen sein, eine Schalthysterese in Bezug auf die Leistung einzuführen. Erst wenn die Leistung unterhalb einer unteren Grenzleistung sinkt, wird in den Schwachwindbetrieb umgeschaltet; umgekehrt wird erst dann wieder zurück in den Starkwindbetrieb geschaltet, wenn die Leistung über einer oberen Grenzleistung liegt, die größer als die untere Grenzleistung ist.

Das Umschalten zwischen den Betriebsarten muss zwangsläufig während des Betriebs der Windenergieanlage, also unter Leistung erfolgen. Um unerwünschte Sprünge und Regelungsschwingungen zu vermeiden, ist es zweckmäßig, beim Umschalten zwischen den Betriebsarten die Drehzahl konstant zu halten. Damit werden störende Einflüsse durch Windschwankungen auf den Umschaltvorgang eliminiert. Der eigentliche Vorteil des Konstanthaltens der Drehzahl liegt aber darin, dass die von dem Generator abgegebene elektrische Leistung bis auf Null reduziert werden kann, um so den Umschalter lastfrei zu betätigen. Verschleiß und Störungen durch Spannungssprünge sind damit eliminiert oder auf ein Mindestmaß reduziert. Zweckmäßigerweise geschieht dies dadurch, dass zum Einleiten des Umschaltens dem Pitch-Regler des Windrotors eine feste Drehzahl als Sollwert vorgegeben wird. Durch Verändern des Einstellwinkels der Blätter hält der Pitch-Regler die Drehzahl auch dann, wenn die elektrische Leistung des Generators und damit die Bremsleistung auf Null absinkt. Am Ende des Umschaltens wird die Drehzahl wieder freigegeben, und von einer Betriebssteuerung der Windenergieanlage gemäß dem üblichen Betrieb kontrolliert. Als Sollwert kann die aktuelle Drehzahl vor dem Umschalten oder eine gewünschte nach dem Umschalten verwendet werden. Der Sollwert kann auch so gewählt sein, dass beim Umschalten ein möglichst geringer Drehmomentsprung entsteht. Die mechanischen Komponenten im Antriebsstrang, insbesondere ein Getriebe, sind dadurch geschont.

Im Übrigen wird auf die vorstehend gegebene Erläuterung zu der erfindungsgemäßen Windenergieanlage verwiesen.

Die Erfindung wird nachfolgend unter Bezugnahme auf die beigefügte Zeichnung näher erläutert, in der vorteilhafte Ausführungsbeispiele dargestellt sind. Es zeigen:
- Fig. 1: eine schematische Darstellung einer Windenergieanlage gemäß einem ersten Ausführungsbeispiel der Erfindung;
- Fig. 2: eine Übersichts-Schaltungsdarstellung für die Windenergieanlage gemäß Fig. 1;
- Fig. 3: einen Kennlinienausschnitt zur Verdeutlichung des erfindungsgemäßen Verfahrens für den Betrieb der Windenergieanlage gemäß Fig. 1;
- Fig. 4: eine schematische Ansicht eines zweiten Ausführungsbeispiels der Erfindung; und
- Fig. 5: einen Ablaufplan für das Verfahren gemäß Fig. 3.

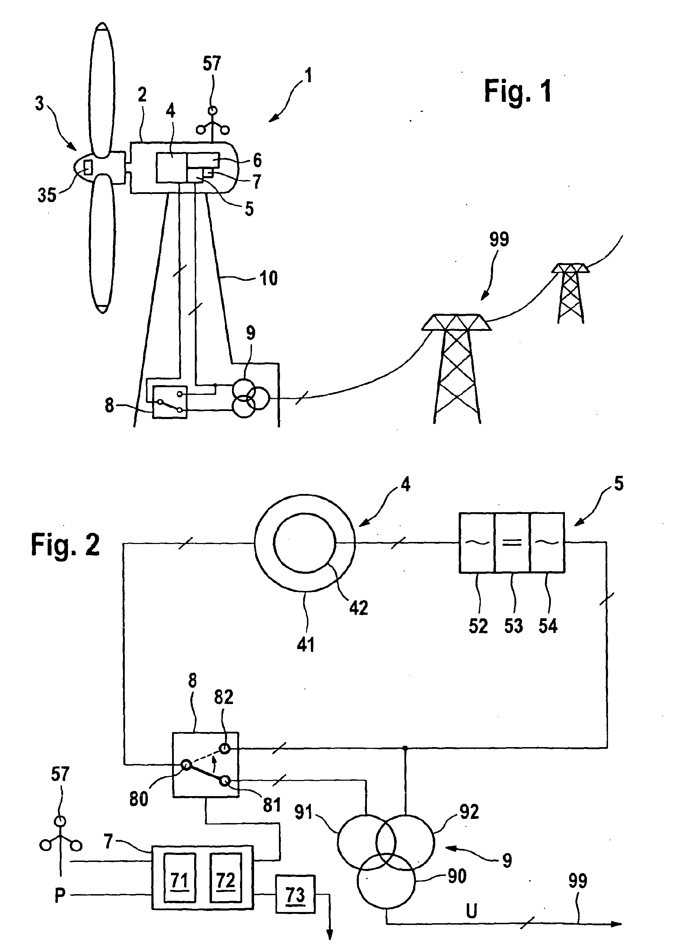

In Fig. 1 ist ein Ausführungsbeispiel für eine erfindungsgemäße Windenergieanlage schematisch dargestellt. Die in ihrer Gesamtheit mit der Bezugsziffer 1 bezeichnete Windenergieanlage umfasst eine auf einem Turm 10 drehbar angeordnete Gondel 2. An ihrer Stirnseite ist ein Windrotor 3 drehbar angeordnet. Er treibt über eine (nicht dargestellte) Antriebswelle einen Generator 4 an, der als doppelt gespeister Asynchrongenerator ausgeführt ist. Außer diesem ist in der Gondel 2 ein Umrichter 5, eine Steuerung 6 sowie eine Zusatzsteuereinrichtung 7 und eine Windmesseinrichtung 57 angeordnet. Zur Drehzahlregelung des Windrotors 3 ist ein Pitch-Regler 35 vorgesehen. Die von dem Generator 4 in der Gondel 2 erzeugte elektrische Leistung wird über zwei Verbindungen (es handelt sich hierbei um dreiphasige Drehstromleitungen, wie durch den kleinen schrägstehenden Querstrich symbolisiert ist) einem Transformator 9 am Fußpunkt des Turms 10 zugeführt. Der Transformator 9 ist wiederum an ein Mittelspannungsnetz 99 angeschlossen. Bis auf die Zusatzsteuereinrichtung 7 ist der Aufbau und die Funktionsweise der Windenergieanlage 1 insoweit konventionell, und braucht daher nicht näher beschrieben zu werden. Zu beachten ist, dass aus Gründen der Übersichtlichkeit einphasige Ersatzschaltbilder den Figuren zu Grunde gelegt sind.

Das elektrische System der Windenergieanlage 1 ist in Fig. 2 näher dargestellt. Der als doppelt gespeiste Asynchronmaschine ausgeführte Generator 4 weist einen Stator und einen Rotor 42 auf. Letzterer ist über die Antriebswelle mit dem Windrotor 3 verbunden, und wird von dieser im Betrieb in Drehung versetzt. Durch die Drehbewegung wird Elektrizität in den Wicklungen des Stators 41 und Rotors 42 erzeugt. Der Stator 41 ist direkt über einen als Umschalter 8 ausgeführten Zusatzschalter mit dem Transformator 9 verbunden. Der Rotor 42 ist über den Umrichter 5 mit dem Transformator 9 verbunden. Der Umrichter 5 weist einen maschinenseitigen Wechselrichter 52, einen netzseitigen Wechselrichter 54 und einen diese beiden verbindenden Zwischenkreis 53 auf. Der Transformator 9 ist als Dreiwicklungstransformator ausgeführt. Er weist zwei Primärwicklungen auf, nämlich eine erste Primärwicklung 91 und eine zweite Primärwicklung 92. Ferner weist er eine Sekundärwicklung 90 auf. Das Wicklungsverhältnis ist so gewählt, dass die Sekundärwicklung 90 an das Mittelspannungsnetz 99 angeschlossen ist. Dabei sind aufgrund des gewählten Wicklungsverhältnisses die erste Primärwicklung auf eine Spannung von 950 Volt und die zweite Primärwicklung auf eine Spannung von 690 Volt ausgelegt. Der Rotor 42 ist über den Umrichter 5 an die zweite Primärwicklung 92 angeschlossen. Der Stator 41 ist, wie bereits gesagt, über den Umschalter 8 mit dem Transformator 9 verbunden. Dabei ist der Stator 41 mit einem Eingangsanschluss 80 des Umschalters 8 verbunden. Dieser ist je nach Schalterstellung mit einem ersten Ausgangsanschluss 81 verbunden, an den die erste Primärwicklung 91 angeschlossen ist. In der anderen Ausgangsstellung ist der Eingangsanschluss 80 mit dem zweiten Ausgangsanschluss 82 verbunden, an den die zweite Primärwicklung 92 angeschlossen ist. Dies bedeutet, dass je nach Schalterstellung des Umschalters 8 der Stator 41 entweder mit der ersten Primärwicklung 91 oder mit der zweiten Primärwicklung 92 verbunden ist.

Zur Betätigung des Umschalters 8 über einen Steueranschluss ist die Zusatzsteuereinrichtung 7 vorgesehen.

Die Zusatzsteuereinrichtung 7 dient dazu, mittels an ihrem Eingang anliegender Signale ein Steuersignal für den Umschalter 8 zu bestimmen. Es sind zwei Eingänge für die Zusatzsteuereinrichtung 7 vorgesehen. An den einen ist die Windeinmesseinrichtung 57 angeschlossen, und an den anderen Eingang ist ein Signal für die von der Windenergieanlage 1 erzeugte elektrische Leistung P angeschlossen. Dieses Signal kann direkt gemessen sein mittels (nicht dargestellter) Messeinrichtungen, oder es kann der Steuerung 5 entnommen sein, wo in der Regel ohnehin ein solches Signal vorliegt. Zur Signalverarbeitung weist die Zusatzsteuereinrichtung 7 ein Leistungsmonitormodul 71 und ein Klassifikationsmodul 72 auf. Das Leistungsmonitormodul 71 ist dazu ausgebildet, aus den von der Windmesseinrichtung 57 und/oder dem elektrischen Leistungssignal P stammenden Eingangssignalen einen Lastgrad µ der Windenergieanlage 1 zu bestimmen. Der Lastgrad µ ist dabei ein quantitatives Maß dafür, ob die Windenergieanlage 1 im Leerlauf, im Teillastbetrieb oder gar im Volllastbetrieb (entsprechend einem Lastgrad von 100%) läuft. Der Lastgrad µ kann mit einem physikalischen Parameter, wie bspw. der Windgeschwindigkeit oder der erzeugten elektrischen Leistung, übereinstimmen oder ein synthetischer Parameter sein, der aus diesen Eingangsgrößen und/oder anderen generiert wird. Das Klassifikationsmodul 72 ist dazu ausgebildet, aus dem von dem Leistungsmonitormodul 71 ermittelten Lastgrad eine Klassifikation danach vorzunehmen, ob die Windenergieanlage 1 unter den vorherrschenden Bedingungen in einem Schwachwindbetrieb läuft oder nicht. Ist dies der Fall, so gibt das Klassifikationsmodul 72 das Steuersignal an den Umschalter 8, wodurch bewirkt wird, dass der Umschalter 8 in die gestrichelt dargestellte Stellung umschaltet. Der Stator 41 ist dann nicht mehr an die erste Primärwicklung 91, sondern an die zweite Primärwicklung 92 angeschlossen.

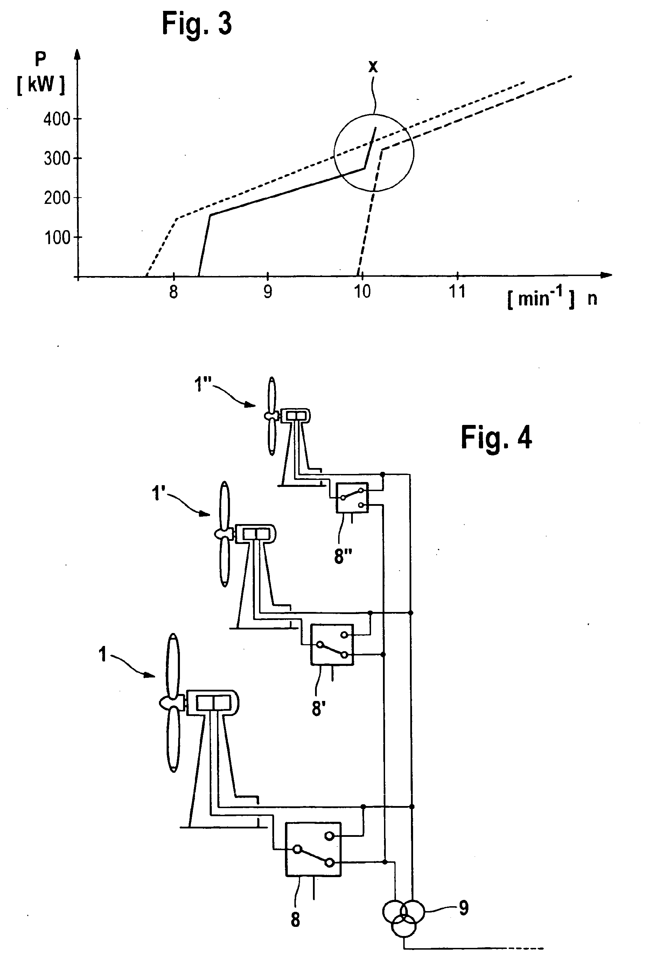

Die sich ergebenden Kennlinien sind am Beispiel einer 2MW-Anlage in Fig. 3 gestrichelt dargestellt. Über der Umdrehungszahl des Windrotors 3, die ein Maß für die Windgeschwindigkeit und damit die Windleistung darstellt, auf der X-Achse ist die abgegebene elektrische Leistung P auf der Y-Achse abgetragen. Mit einer gestrichelten Kennlinie ist eine konventionelle Windenergieanlage dargestellt, die auf einen Betriebsschlupf von maximal 25% ausgelegt ist. Mit einer gepunkteten Linie ist dargestellt, wie der Betriebsbereich der konventionellen Windenergieanlage durch Aufrüstung mit einem stärker dimensionierten Umrichter erweitert werden kann. Der Umrichter der konventionellen Anlage ist dazu derart groß dimensioniert, dass der Betriebsschlupf bis zu 40% betragen kann. Man erkennt, dass der Betriebsbereich der Windenergieanlage damit beträchtlich hin zu niedrigeren Umdrehungszahlen, also zu schwächeren Windbedingungen erweitert wird, allerdings um den Preis eines erheblich aufwendigeren Umrichters. Mit einer ausgezogenen Linie ist nun die Kennlinie dargestellt, die sich bei einer im Übrigen herkömmlichen Windenergieanlage (ohne aufwendig verstärkten Umrichter) gemäß der Erfindung ergibt, wenn der Umschalter 8 betätigt ist. Dann ist die Wicklung des Stators 41 nicht mehr mit der ersten Primärwicklung 91, sondern mit der zweiten Primärwicklung 92 verbunden, befindet sich also auf einem niedrigeren Spannungsniveau. Dadurch verschiebt sich die Kennlinie ausgehend von dem gestrichelt dargestellten Fall zu dem mit der durchgezogenen Linie dargestellten Fall. Die Windenergieanlage kann auch noch bei wesentlich niedrigeren Drehzahlen des Windrotors 3, und damit auch bei wesentlich schwächeren Bedingungen, noch elektrische Leistung erzeugen und abgeben. Frischt der Wind auf, erreicht er also mittlere oder höhere Stärken, kann durch einfaches Zurückschalten des Umschalters 8 wieder auf die normale (gestrichelt dargestellte) Kennlinie umgeschaltet werden. Der nutzbare Windstärkebereich, in dem die Windenergieanlage 1 sinnvoll betrieben werden kann, wird auf diese Weise dank der Erfindung deutlich nach unten erweitert. Der dafür zusätzliche Aufwand ist minimal. Es wird, anders als im Stand der Technik (mit der gepunkteten Linie dargestellt) kein aufwendig verstärkter Umrichter 5 benötigt, sondern es genügt ein einfacher Umschalter. Ein Dreiwicklungstransformator 9 mit zwei Primärwicklungen 91, 92 ist üblicherweise ohnehin vorhanden. Die Erfindung verknüpft damit eine erhebliche Erweiterung des Betriebsbereichs mit einem Minimum an zusätzlichem Aufwand.

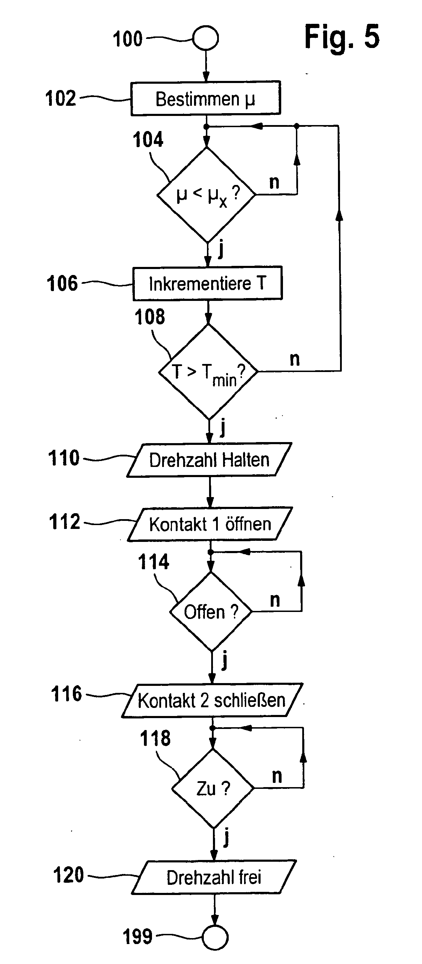

Das erfindungsgemäße Verfahren und seine Funktionsweise wird nachfolgend unter Bezugnahme auf die Fig. 5 erläutert. Die Windenergieanlage 1 wird regulär so betrieben, dass der Stator 41 mit der ersten Primärwicklung 91 verbunden ist. Das bedeutet, dass der Stator 41 auf einem höheren Spannungsniveau von bspw. 950 Volt verglichen mit dem Spannungsniveau des an die zweite Primärwicklung 92 angeschlossenen Rotors 42 betrieben wird. Dies ist, wie eingangs gesagt, der Normalbetrieb der Windenergieanlage und ermöglicht einen Betrieb bei kräftigen und mittleren Windbedingungen.

Zu Beginn (Schritt 100) des Verfahrens wird von dem Leistungsmonitormodul 71 der Lastgrad µ bestimmt (Schritt 102).

Nachfolgend wird mittels des Klassifikationsmoduls 72 geprüft, ob gemäß dem Lastgrad Schwachwindbedingungen herrschen (Schritt 104). Ist dies nicht der Fall, so erfolgt ein Rücksprung. Falls aber Schwachwindbedingungen vorliegen, wird ein Zeitglied T weiter gezählt (Schritt 106). Es wird dann abgewartet, ob die Schwachwindbedingungen über eine bestimmte, einstellbare Zeitdauer Tₘᵢₙ anhalten (Schritt 108). Falls dies der Fall ist, so erfolgt eine Fortsetzung des erfindungsgemäßen Verfahrens; falls dies nicht so nicht so erfolgt ein Rücksprung. Liegen also über einen bestimmten, längeren Zeitraum Schwachwindbedingungen vor, so wird gemäß der Erfindung die Windenergieanlage 1 mittels des Umschalters 8 so umgeschaltet, dass der Stator 41 mit der zweiten Primärwicklung 92 verbunden ist. Mit anderen Worten, die Windenergieanlage wird umgeschaltet auf die in Fig. 3 durchgezogen dargestellte Kennlinie. Dieser Bereich in den Kennlinien ist in Fig. 3 durch die Markierung X herausgehoben. Das Umschalten wird bewirkt durch das Ausgangssignal der Zusatzsteuereinrichtung 7. Es ist, wie dargestellt, an dem Umschalter 8 angelegt. Die Zusatzsteuereinrichtung 7 gibt aber noch ein zweites, überlagertes Ausgangssignal an eine Drehzahlsteuereinrichtung 73 aus (Schritt 110). Sie ist dazu ausgebildet, mittels des Pitch-Reglers 35 die Drehzahl des Windrotors 3 während des Vorgangs des Umschaltens konstant zu halten. Dies dient dazu, eine Überhöhung der Drehzahl bei Entlastung aufgrund kurzzeitiger Unterbrechung des vom Stator 41 führenden Stromkreises zu vermeiden. Der Drehzahlregler 73 ist dazu ausgebildet, ein Stellsignal zum Konstanthalten der Drehzahl an einen Drehzahlregler 35 des Rotors auszugeben. In einem nächsten Schritt wird an dem anderen Ausgang der Steuereinrichtung 7 das Schaltsignal an den Umschalter 8 ausgegeben (Schritt 112). Die Schalterstellung wechselt dabei von dem ersten Ausgangsanschluss 81 auf den zweiten Ausgangsanschluss 82. Dadurch ist der Stator 41 nicht mehr mit der ersten Primärwicklung 91, sondern mit der zweiten Primärwicklung 92 verbunden. Zuerst öffnet sich dabei der Kontakt zu dem ersten Ausgangsanschluss 81. Dies wird in Schritt 114 überwacht. Ist der Umschalter 8 wie in dem dargestellten Beispiel als einfacher Umschalter ausgelegt, so braucht nichts weiter veranlasst zu werden. Falls aber zwei gesonderte Schalteinheiten verwendet werden, so ist nach dem Öffnen des Kontakts zu der ersten Primärwicklung 91 der zweite Kontakt zu betätigen, um die Verbindung mit der zweiten Primärwicklung 92 herzustellen. Dies geschieht ggf. in Schritt 116. Es wird dann nachfolgend überwacht, dass der neue Kontakt zu der zweiten Primärwicklung 92 hergestellt ist (Schritt 118). Damit ist der Statorstromkreis wiederhergestellt und der Stator 41 ist mit dem Transformator 9 verbunden. Die Drehzahl braucht nicht länger festgehalten zu werden, und es wird ein Signal zur Freigabe der Drehzahlsteuerung an das Drehzahlmodul 73 ausgegeben (Schritt 120). Damit erreicht der dargestellte Umschaltvorgang sein Ende (199).

Die Erfindung eignet sich auch zur Verwendung in einem Windpark. In Fig. 4 ist ein solcher Windpark anhand eines Beispiels mit drei Windenergieanlagen 1, 1', 1" dargestellt. Jede der Windenergieanlagen weist einen eigenen Umschalter 8, 8' bzw. 8" auf, die mit dem gemeinsamen Transformator 9 verbunden sind. Sie können zentral von einer Parksteuerung (nicht dargestellt) betätigt sein, oder sie können dezentral von den einzelnen Steuerungen der Windenergieanlagen 1, 1', 1" betätigt sein. Im letzteren Fall besteht die Möglichkeit, dass die einzelnen Windenergieanlagen 1, 1', 1" unabhängig voneinander geschaltet werden.

So sei in dem dargestellten Ausführungsbeispiel die Windstärke bei den beiden vorderen Anlagen 1, 1' hoch. Sie können in ihrem Normalbereich betrieben werden. Der Umschalter 8, 8' steht daher auf dem ersten Ausgangsanschluss 81, wobei der Stator mit der ersten Primärwicklung 91 des Transformators 9 verbunden ist. Hingegen sei an der hinteren Windenergieanlage 1" der Wind nur schwach. Daher ist durch die Steuerung gemäß dem erfindungsgemäßen Verfahren die Windenergieanlage in die Betriebsart für Schwachwind umgeschaltet. Dazu ist der Umschalter 8" betätigt, so dass der Stator des Generators dieser Windenergieanlage 1" mit der zweiten Primärwicklung 92 verbunden ist. Man erkennt, dass die Erfindung individuell bei den einzelnen Windenergieanlagen des Windparks ausgeführt sein kann, ohne dass aber jede Windenergieanlage einen eigenen Dreiwicklungstransformator benötigt. Jede der Windenergieanlagen kann damit mit der Kennlinie betrieben werden (siehe Fig. 3), die bei den lokal bei der jeweiligen Windenergieanlage herrschenden Windverhältnissen das beste Ergebnis liefert.

## Patentansprüche

1. Windenergieanlage umfassend einen Windrotor (3) zum Antrieb eines doppelt gespeisten Asynchrongenerators (4) mit Stator (41) und Rotor (42) zur Abgabe elektrischer Leistung an einen Transformator (9) mit einer ersten Primärwicklung (91) und einer Sekundärwicklung (90), wobei der Rotor (42) des Asynchrongenerators (4) an die erste Primärwicklung (91) angeschlossen ist,
**dadurch gekennzeichnet, dass**
der Transformator (9) eine zweite Primärwicklung (92) aufweist und eine Zusatzschaltung mit einem Umschalter (8) zwischen Asynchrongenerator (4) und dem Transformator (9) derart geschaltet ist, dass der Umschalter (8) in Abhängigkeit von einem Schaltsignal den Stator (42) des Asynchrongenerators (4) mit der ersten Primärwicklung (91) oder der zweiten Primärwicklung (92) verbindet, so dass der Stator im Schwachwindbetrieb auf einem niedrigeren Spannungsniveau gehalten ist.

2. Windenergieanlage nach Anspruch 1,
**dadurch gekennzeichnet, dass**
die eine der Primärwicklungen (92) mittels einer Anzapfung an der anderen Primärwicklung (91) gebildet ist.

3. Windenergieanlage nach einem der vorangehenden Ansprüche,
**dadurch gekennzeichnet, dass**
die Zusatzschaltung weiter eine Zusatzsteuereinrichtung (7) zur selbsttätigen Erzeugung des Schaltsignals aufweist.

4. Windenergieanlage nach Anspruch 3,
**dadurch gekennzeichnet, dass**
die Zusatzsteuereinrichtung (7) ein Leistungsmonitormodul (71) aufweist, das mit einem Klassifikationsmodul (72) verbunden ist, wobei das Klassifikationsmodul (72) dazu ausgebildet ist, von dem Leistungsmonitormodul (71) abgegebene Signale in einen Schwach- und einen Starkwindbetrieb zu klassifizieren.

5. Windenergieanlage nach Anspruch 4,
**dadurch gekennzeichnet, dass**
an das Leistungsmonitormodul (71) als Eingangssignal eine Meßeinrichtung (57) für die Windstärke und/oder ein Messsignal für die abgegebene elektrische Leistung angeschlossen ist.

6. Windenergieanlage nach einem der Ansprüche 1 bis 5,
**dadurch gekennzeichnet, dass**
eine weitere Primärwicklung vorgesehen ist und der Umschalter (8) so ausgebildet ist, um den Asynchrongenerator (4) mit der ersten, zweiten oder weiteren Primärwicklung (91, 92) zu verbinden.

7. Verfahren zum Betreiben einer Windenergieanlage mit einem Windrotor (3), einem davon angetriebenen doppelt gespeisten Asynchrongenerator (4) mit Stator (41) und Rotor (42) zur Abgabe elektrischer Energie an einen Transformator (9), wobei der Generator (4) über einen Umschalter (8) mit dem Transformator (9) verbunden ist und je nach Stellung des Umschalters (8) in einer ersten oder zweiten Betriebsart betrieben wird,
**gekennzeichnet durch**
Betreiben der Windenergieanlage in einer der Betriebsarten, wobei der Stator (41) des Generators (4) mit einer der Primärwicklungen (91, 92) des Transformators (9) verbunden ist, Überwachen der Leistung der Windenergieanlage, Bestimmen, ob die Windenergieanlage in einem Schaltbereich betrieben wird, Betätigen des Umschalters (8), wodurch der Stator (41) des Generators (4) mit einer anderen der Primärwicklungen (92, 91) verbunden wird und Betreiben der Windenergieanlage in der anderen Betriebsart, wobei, der stator im Schwechwindbetrieb auf einem neidrigeren Spennungsviveau gehalten ist.

8. Verfahren nach Anspruch 7,
**dadurch gekennzeichnet, dass**
das Bestimmen, ob die Gvlindenergieanlage im Schaltbereich betrieben wird, unter Berücksichtigung einer Mindestzeitdauer erfolgt.

9. Verfahren nach Anspruch 8,
**gekennzeichnet durch**,
Abfragen eines Timers.

10. Verfahren nach einem der Ansprüche 7 bis 9,
**dadurch gekennzeichnet, dass**
das Bestimmen, ob die Windenergieanlage in einem Schaltbereich betrieben wird, unter Berücksichtigung einer Hysterese erfolgt.

11. Verfahren nach einem der Ansprüche 7 bis 10,
**gekennzeichnet durch**
Festhalten einer Drehzahl des Rotors (3) vor dem Betätigen des Umschalters (8) und Freigeben der Drehzahl danach.

12. Verfahren nach Anspruch 11,
**dadurch gekennzeichnet, dass**
das Festhalten durch Vorgeben eines besonderen Sollwerts an einen Pitch-Regler (35) mittels eine Drehzahlstellmoduls (73).

13. Verfahren nach Anspruch 12,
**dadurch gekennzeichnet, dass**
als besonderer Sollwert der aktuelle Drehzahlwert vor dem Umschalten verwendet wird.

14. Verfahren nach Anspruch 12,
**dadurch gekennzeichnet, dass**
als besonderer Sollwert ein gewünschter Drehsollwert nach dem Umschalten verwendet wird.

15. Verfahren nach Anspruch 14,
**dadurch gekennzeichnet, dass**
der Drehzahlwert so gewählt wird, dass beim Umschalten ein möglichst geringer Drehmomentsprung entsteht.

## Claims

1. Wind energy installation comprising a wind rotor (3) for driving a doubly-fed asynchronous generator (4) having a stator (41) and a rotor (42) for emission of electrical power to a transformer (9) having a first primary winding (91) and a secondary winding (90), with the rotor (42) of the asynchronous generator (4) being connected to the first primary winding (91),
**characterized in that**
the transformer (9) has a second primary winding (92) and an additional circuit with a changeover switch (8) is connected between the asynchronous generator (4) and the transformer (9) such that the changeover switch (8) connects the stator (42) of the asynchronous generator (4) to the first primary winding (91) or to the second primary winding (92) as a function of a switching signal, such that the stator is kept at a lower voltage level during weak-wind operation.

2. Wind energy installation according to Claim 1,
**characterized in that**
one of the primary windings (92) is formed by means of a tap on the other primary winding (91).

3. Wind energy installation according to one of the preceding claims,
**characterized in that**
the additional circuit furthermore has an additional control device (7) for automatic production of the switching signal.

4. Wind energy installation according to Claim 3,
**characterized in that**
the additional control device (7) has a power monitor module (71) which is connected to a classification module (72), with the classification module (72) being designed to classify signals emitted from the power monitor module (71) as weak-wind operation and strong-wind operation.

5. Wind energy installation according to Claim 4,
**characterized in that**
a measurement device (57) for the wind strength and/or a measurement signal for the emitted electrical power are/is connected as an input signal to the power monitor module (71).

6. Wind energy installation according to one of Claims 1 to 5,
**characterized in that**
a further primary winding is provided, and the changeover switch (8) is designed so as to connect the asynchronous generator (4) to the first, second or further primary winding (91, 92).

7. Method for operation of a wind energy installation having a wind rotor (3), a doubly-fed asynchronous generator (4) which is driven by said wind rotor (3) and has a stator (41) and a rotor (42) for emission of electrical power to a transformer (9), with the generator (4) being connected to the transformer (9) via a changeover switch (8) and being operated in a first operating mode or a second operating mode, depending on the position of the changeover switch (8),
**characterized by**
operation of the wind energy installation in one of the operating modes, with the stator (41) of the generator (4) being connected to one of the primary windings (91, 92) of the transformer (9), monitoring of the power of the wind energy installation, determination of whether the wind energy installation is being operated in a switching range, operation of the changeover switch (8), as a result of which the stator (41) of the generator (4) is connected to another of the primary windings (92, 91), and operation of the wind energy installation in the other operating mode, with the stator being kept at a lower voltage level during weak-wind operation.

8. Method according to Claim 7,
**characterized in that**
the determination of whether the wind energy installation is being operated in a switching range is made taking account of a minimum time duration.

9. Method according to Claim 8,
**characterized by**
checking of a timer.

10. Method according to one of Claims 7 to 9,
**characterized in that**
the determination of whether the wind energy installation is being operated in a switching range is made taking account of hysteresis.

11. Method according to one of Claims 7 to 10,
**characterized by**
fixing of a rotation speed of the rotor (3) before the operation of the changeover switch (8), and release of the rotation speed thereafter.

12. Method according to Claim 11,
**characterized in that**
the fixing is carried out by presetting a special nominal value for a pitch regulator (35) by means of a rotation-speed adjustment module (73).

13. Method according to Claim 12,
**characterized in that**
the instantaneous rotation speed value before switching is used as the special nominal value.

14. Method according to Claim 12,
**characterized in that**
a desired nominal rotation value after switching is used as the special nominal value.

15. Method according to Claim 14,
**characterized in that**
the rotation speed value is chosen such that any sudden torque change during switching is as small as possible.

## Revendications

1. Eolienne comportant un rotor d'éolienne (3) destiné à l'entraînement d'un générateur asynchrone (4) alimenté doublement avec un stator (41) et un rotor (42) en vue de fournir une puissance électrique à un transformateur (9) avec un premier enroulement du circuit primaire (91) et un enroulement du circuit secondaire (90), le rotor (42) du générateur asynchrone (4) étant raccordé au premier enroulement du circuit primaire (91),
**caractérisée en ce que**
le transformateur (9) présente un second enroulement du circuit primaire (92) et **en ce qu'**un couplage additionnel avec un commutateur (8) est installé entre le générateur asynchrone (4) et le transformateur (9) de telle manière que le commutateur (8) relie, en fonction d'un signal de commutation, le stator (41) du générateur asynchrone (4) au premier enroulement du circuit primaire (91) ou au second enroulement du circuit primaire (92), de sorte que le stator soit maintenu en mode vent faible à un niveau de tension plus bas.

2. Eolienne selon la revendication 1,
**caractérisée en ce que**
l'un des enroulements (92) du circuit primaire est formé au moyen d'un branchement sur l'autre enroulement (91) du circuit primaire.

3. Eolienne selon l'une quelconque des revendications précédentes,
**caractérisée en ce que**
le couplage additionnel présente en outre un dispositif de commande supplémentaire (7) destiné à générer automatiquement le signal de commutation.

4. Eolienne selon la revendication 3,
**caractérisée en ce que**
le dispositif de commande supplémentaire (7) présente un module de surveillance de la puissance (71) relié à un module de classification (72), le module de classification (72) étant réalisé afin de classifier des signaux délivrés par le module de surveillance de la puissance (71) dans un mode vent faible et un mode vent fort.

5. Eolienne selon la revendication 4,
**caractérisée en ce**
**qu'**un dispositif de mesure (57) pour la force du vent et/ou un signal de mesure pour la puissance électrique débitée est raccordé au module de surveillance de la puissance (71) comme signal d'entrée.

6. Eolienne selon l'une quelconque des revendications 1 à 5,
**caractérisée en ce**
**qu'**un autre enroulement du circuit primaire est prévu et en ce que le commutateur (8) est réalisé de telle sorte qu'il relie le générateur asynchrone (4) au premier, au second ou à l'autre enroulement du circuit primaire (91, 92).

7. Procédé de fonctionnement d'une éolienne comportant un rotor d'éolienne (3), un générateur asynchrone (4) entraîné par celui-ci et alimenté doublement, avec un stator (41) et un rotor (42), en vue de fournir de l'énergie électrique à un transformateur (9), le générateur (4) étant relié via un commutateur (8) au transformateur (9) et fonctionnant selon la position du commutateur (8) dans un premier ou un second mode,
**caractérisé par**
le fonctionnement de l'éolienne dans l'un des modes, le stator (41) du générateur (4) étant relié à l'un des enroulements du circuit primaire (91, 92) du transformateur (9), la surveillance de la puissance de l'éolienne, la détermination du fonctionnement, le cas échéant, de l'éolienne dans une plage de commutation, l'actionnement du commutateur (8), par lequel le stator (41) du générateur (4) est relié à un autre des enroulements du circuit primaire (92, 91) et le fonctionnement de l'éolienne dans l'autre mode, le stator étant maintenu en mode vent faible à un niveau de tension plus faible.

8. Procédé selon la revendication 7,
**caractérisé en ce que**
la détermination du fonctionnement de l'éolienne dans la plage de commutation, est réalisée en tenant compte d'une durée minimale.

9. Procédé selon la revendication 8,
**caractérisé par**
l'interrogation d'une minuterie.

10. Procédé selon l'une quelconque des revendications 7 à 9,
**caractérisé en ce que**
la détermination du fonctionnement de l'éolienne dans une plage de commutation, est réalisée en tenant compte d'une hystérèse.

11. Procédé selon l'une quelconque des revendications 7 à 10,
**caractérisé par**
le maintien d'une vitesse de rotation du rotor (3), avant l'actionnement du commutateur (8), et la libération de la vitesse de rotation, après.

12. Procédé selon la revendication 11,
**caractérisé par**
le maintien par prescription d'une valeur de consigne particulière à un régulateur d'inclinaison (35) au moyen d'un module de réglage de la vitesse de rotation (73).

13. Procédé selon la revendication 12,
**caractérisé en ce que**
la valeur de vitesse de rotation actuelle est utilisée comme valeur de consigne particulière avant la commutation.

14. Procédé selon la revendication 12,
**caractérisé en ce**
**qu'**une valeur de consigne de rotation souhaitée est utilisée comme valeur de consigne particulière après la commutation.

15. Procédé selon la revendication 14,
**caractérisé en ce que**
la valeur de vitesse de rotation est choisie de sorte qu'une augmentation de couple la plus faible possible apparaisse lors de la commutation.
